# EUROPÄISCHE PATENTSCHRIFT

(11) **EP 2 494 630 B1**
(45) Veröffentlichungstag und Bekanntmachung des Hinweises auf die Patenterteilung: **07.08.2013**
(21) Anmeldenummer: 10768700.6
(22) Anmeldetag: 22.10.2010
(51) Int. Cl.: H01M 2/10, H01M 2/20, H01M 10/50

(54) **ELEKTROCHEMISCHE ZELLE**
ELECTROCHEMICAL CELL
CELLULE ÉLECTROCHIMIQUE

(30) Priorität: 29.10.2009 DE 102009051213
(43) Veröffentlichungstag der Anmeldung: 05.09.2012
(73) Patentinhaber: Li-tec Battery GmbH, 01917 Kamenz (DE)
(72) Erfinder: SCHAEFER, Tim, 99768 Harztor (DE); GUTSCH, Andreas, 59348 Luedinghausen (DE)
(74) Vertreter: Wallinger, Michael
(86) Internationale Anmeldenummer: PCT/EP2010/006476
(87) Internationale Veröffentlichungsnummer: WO 2011/050931

(56) Entgegenhaltungen:
- EP-A1- 1 845 570
- EP-A2- 0 926 748
- WO-A1-96/29749
- WO-A2-00/65683
- US-A- 5 741 612

## Beschreibung

Die vorliegende Erfindung betrifft eine elektrochemische Zelle, insbesondere für die Anwendung in einem elektrisch angetriebenen Fahrzeug.

Die WO 96/29749 A1 zeigt eine Methode und Struktur zum Befestigen einer Batterie an einem elektrischen Gerät. Eine Batterie wird dabei mittels eines Klettverschlusses an das elektrische Gerät angebracht. Die Elemente des Klettverschlusses können aus einem stromleitenden Material hergestellt sein.

Die WO 2009/089881 A1 offenbart ein Verfahren zur Herstellung von Verschlusselementen für metallische Haftverschlüsse. Dabei werden Biegevorgänge durchgeführt, bei denen Verhakungselemente aus der Ebene eines Trägers hochgestellt und abgebogen werden, sodass diese eine Hakenform besitzen.

Die WO 00/65683 A2 beschreibt eine Batterie mit einer elektrochemischen Zelle, an weicher eine integrierte Schaltung mittels einer metallischen Klettverbindung angebracht werden kann.

Die EP 1 845 570 A1 offenbart ein Batteriemodul mit mehreren plattenförmigen Batteriezellen. Die einzelnen Batteriezellen sind dabei über Klettbänder aus einem Material hoher Wärmeleitfähigkeit miteinander verbunden.

Ausgehend hiervon ist es Aufgabe der vorliegenden Erfindung, eine verbesserte elektrochemische Zelle bereitzustellen.

Diese Aufgabe wird gelöst durch eine elektrochemische Zelle mit den in Anspruch 1 angegebenen Merkmalen.

Im Sinne der Erfindung ist unter einer elektrochemischen Zelle eine Vorrichtung zu verstehen, welche auch zur Speicherung chemischer Energie und zur Abgabe elektrischer Energie dient. Dazu kann die erfindungsgemäße elektrochemische Zelle wenigstens über einen Elektrodenstapel verfügen, der mittels einer Umhüllung gegenüber der Umwelt weitgehend gas- und flüssigkeitsdicht abgegrenzt ist. Auch kann die elektrochemische Zelle ausgestaltet sein, elektrische Energie beim Laden aufzunehmen. Man spricht dann auch von einer Sekundärzelle oder einem Akkumulator. Der Begriff Elektrodenstapel umfasst auch Elektrodenwickel.

Mit einem Stromableiter ist dabei ein Element gemeint, welches aus einem stromleitenden Material hergestellt ist. Es dient zur Leitung von Strom zwischen zwei geometrisch voneinander getrennten Punkten. Im vorliegenden Fall kann ein Stromableiter mit einem Elektrodenstapel verbunden sein. Insbesondere ist der Stromableiter dabei mit allen gleichartigen Elektroden eines Elektrodenstapels verbunden, d.h. entweder mit den Kathoden oder mit den Anoden. Es ist selbstverständlich, dass ein Stromableiter nicht mit den Kathoden oder den Anoden eines Elektrodenstapels gleichzeitig verbunden ist, da dies zu einem Kurzschluss führen würde. Jedoch kann ein Stromableiter mit unterschiedlichen Elektroden von unterschiedlichen Elektrodenstapeln verbunden sein, so z.B. bei einer Reihenschaltung zweier Elektrodenstapel. Wenigstens ein Stromableiter erstreckt sich vorzugsweise aus einer Umhüllung einer elektrochemischen Zelle und kann dabei zum Anschließen der elektrochemischen Zelle nach außen dienen. Der Stromableiter kann mit einer oder mehreren Elektroden einstückig ausgebildet sein oder grundsätzlich mehrstückig ausgebildet sein. Eine Abgrenzung zwischen Stromableiter und Elektrode kann darin gesehen werden, dass der Stromableiter insbesondere nicht mit aktivem Elektrodenmaterial beschichtet ist.

Unter Umhüllung ist im Rahmen der Erfindung eine zumindest teilweise Begrenzung zu verstehen, welche zumindest einen Elektrodenstapel nach außen hin abgrenzt. Die Umhüllung ist vorzugsweise gas- und flüssigkeitsdicht, sodass ein Materialaustausch mit der Umgebung nicht stattfinden kann. Die Elektrodenstapel sind innerhalb der Umhüllung angeordnet. Wenigstens ein Stromableiter, insbesondere zwei Stromableiter erstrecken sich aus der Umhüllung hinaus und dienen zum Anschließen der Elektrodenstapel. Die nach außen sich erstreckenden Stromableiter stellen dabei vorzugsweise den Pluspolanschluss und den Minuspolanschluss der elektrochemischen Zelle dar. Jedoch können sich auch mehrere Stromableiter aus der Umhüllung erstrecken, insbesondere zwei oder vier Stromableiter. Wenn die Batteriezelle dabei zwei separate Elektrodenstapel aufweist, die miteinander in Reihe geschaltet sind, so sind Elektroden unterschiedlicher Elektrodenstapel miteinander verbunden.

Klettverbindungsvorrichtungen weisen in der Regel zwei Klettteile auf, die lösbar zueinander ausgebildet sind. Jeder Klettteil ist durch einen oder mehrere Klettelemente gebildet, welches mit einem Klettelement des anderen Klettteils der Klettverbindungsvorrichtung zusammenwirken kann und lösbar mit diesen befestigt werden kann. Hierbei können sich Formschlussverbindungen zwischen den beiden Klettteilen ergeben, die vorzugsweise aufgrund einer gewissen elastischen Nachgiebigkeit der Klettelemente lösbar sind. Die Klettteile der Klettverbindungsvorrichtung können an jeweils einem Bauteil fest angebracht werden, welches mit einem anderen Bauteil lösbar verbunden werden soll. Das andere Bauteil ist dann fest mit dem anderen Klettteil der Klettverbindungsvorrichtung verbunden.

Durch den Einsatz von metallischen Klettelementen kann sich eine Verbindungsmöglichkeit von elektrochemischen Zellen mit anderen Bauteilen ergeben, insbesondere anderen elektrochemischen Zellen, Wärmeleitplatten oder Gehäuseteilen. Es ist aber auch eine verbesserte Kontaktierungsmöglichkeit zwischen einem Stromableiter der elektrochemischen Zelle und einem daran zu kontaktierenden Element, wie beispielsweise einem Stromableiter einer anderen elektrochemischen Zelle, möglich. Die metallische Klettverbindungsvorrichtung kann sich dabei durch hohe Haltekräfte und hohe Beständigkeit gegen thermische und chemische Einflüsse auszeichnen. Ferner kann die metallische Klettverbindungsvorrichtung eine elektrisch leitende Verbindung herstellen.

Vorzugsweise ist ein Klettteil der Klettverbindungsvorrichtung an einer Umhüllung der elektrochemischen Zelle angebracht. Insbesondere kann der Klettteil der Klettverbindungsvorrichtung einstückig mit der Umhüllung der elektrochemischen Zelle ausgebildet sein. Hiermit ist eine einfache Befestigung der Umhüllung der elektrochemischen Zelle mit einem anderen Bauteil möglich. Insbesondere wenn der Klettteil der Klettverbindungsvorrichtung einstückig mit Klettteilen der elektrochemischen Zelle ausgebildet ist, können weitere Vorkehrungen für eine Befestigung am anderen Bauteil entfallen.

Vorzugsweise ist ein Klettteil einer Klettverbindungsvorrichtung an einem Stromableiter angebracht. Vorzugsweise kann dieser einstückig mit einem Stromableiter der elektrochemischen Zelle ausgebildet sein. Weiter vorteilhaft ist es, wenn mehrere, insbesondere beide Stromableiter einer elektrochemischen Zelle mit einem Klettteil einer Klettverbindungsvorrichtung ausgestattet sind. Die Klettverbindungsvorrichtung, die zumindest teilweise an einem Stromableiter angebracht ist, kann für eine einfache Kontaktierung der Stromableiter mit einem anzuschließenden Element verwendet werden. Insbesondere wenn die Stromableiter einstückig mit dem Klettteil einer Klettverbindungsvorrichtung ausgebildet sind, kann der Stromableiter auch einfach hergestellt werden. Eine gesonderte Befestigung des Klettteils der Klettverbindungsvorrichtung mit dem Stromableiter kann dann entfallen.

Vorzugweise kann ein Klettteil einer Klettverbindungsvorrichtung durch Ausstanzungen, insbesondere am Stromableiter oder an der Umhüllung, gebildet sein. Hierdurch kann auf eine einfache Art und Weise eine einstückige Ausbildung des Stromableiters mit dem Klettteil der Klettverbindungsvorrichtung realisiert werden.

Erfindungsgemäß sind in Zwischenräumen, die zwischen Klettelementen einer Klettverbindungsvorrichtung gebildet sind, Temperierelemente angeordnet, insbesondere eine oder mehrere Kühlschlangen oder eine oder mehrere Kühlmatten. Der Zwischenraum zwischen den Klettelementen kann durch die Anordnung der Temperierelemente platzsparend genutzt werden. Insbesondere eignet sich dieser Bereich durch die insbesondere große Oberfläche der Klettelemente für eine gute Wärmeableitung von der elektrochemischen Zelle.

Die Erfindung betrifft ferner eine Batterieanordnung, mit zumindest einer, insbesondere zwei oder mehr elektrochemischen Zellen der vorgenannten Art.

Vorzugsweise sind dabei zumindest zwei elektrochemische Zellen mittels einer Klettverbindungsvorrichtung miteinander befestigt. Insbesondere sind zwei elektrochemische Zellen ausschließlich mittels einer Klettverbindungsvorrichtung miteinander befestigt. Somit ergibt sich eine leichte und insbesondere auch lösbare Verbindung zwischen zwei elektrochemischen Zellen. Es wird auf die bereits genannten Vorteile der Klettverbindungsvorrichtung im Zusammenhang mit einer elektrochemischen Zelle verwiesen.

In einer bevorzugten Ausgestaltung der Erfindung ist zumindest eine Wärmeleitplatte vorgesehen, die mittels einer Klettverbindungsvorrichtung mit einer elektrochemischen Zelle verbunden ist. Die Wärmeleitplatte ist vorzugsweise aus einem metallischen Werkstoff hergestellt. Dabei ist vorzugsweise die Wärmeleitplatte mittels einer ersten Klettverbindungsvorrichtung mit einer ersten elektrochemischen Zelle verbunden und mittels einer zweiten Klettverbindungsvorrichtung mit einer zweiten elektrochemischen Zelle verbunden. Dabei kann insbesondere vorgesehen sein, dass die Wärmeleitplatte zwischen der ersten und der zweiten elektrochemischen Zelle angeordnet ist. Die Wärmeleitplatte kann ausschließlich über die Klettverbindungsvorrichtung örtlich fixiert sein, d.h. insbesondere, dass keine weitere Befestigungsvorrichtung zur Fixierung der Wärmeleitplatte vorgesehen ist.

Vorzugsweise können Klettelemente einer Klettverbindungsvorrichtung durch Ausstanzungen an der Wärmeleitplatte gebildet sein. Vorzugsweise können Klettelemente einer ersten Klettverbindungsvorrichtung durch Ausstanzungen an der Wärmeleitplatte in eine erste Richtung, und Klettelemente einer zweiten Klettverbindungsvorrichtung durch Ausstanzungen an der Wärmeleitplatte in eine zweite Richtung gebildet werden. Die erste und zweite Richtung sind vorzugsweise entgegengesetzt zueinander ausgerichtet. Alternativ oder in Kombination hierzu können die beiden Richtungen senkrecht zu einer ebenen Erstreckung der Wärmeleitplatte ausgerichtet sein. Hierdurch kann sich eine vereinfachte, nämlich insbesondere einstückige Ausbildung von Klettteilen zweier Klettverbindungsvorrichtungen an der Wärmeleitplatte ergeben.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine erfindungsgemäße Batterieanordnung in einer ersten Ausführungsform;
- Fig. 2: eine erfindungsgemäße Batterieanordnung in einer zweiten Ausführungsform;
- Fig. 3: eine erfindungsgemäße Batterieanordnung in einer dritten Ausführungsform;
- Fig. 4: eine Klettverbindungsvorrichtung für eine erfindungsgemäße Batterieanordnung; und
- Fig.5: eine Wärmeleitplatte mit Klettteilen zweier Klettverbindungsvorrichtungen.

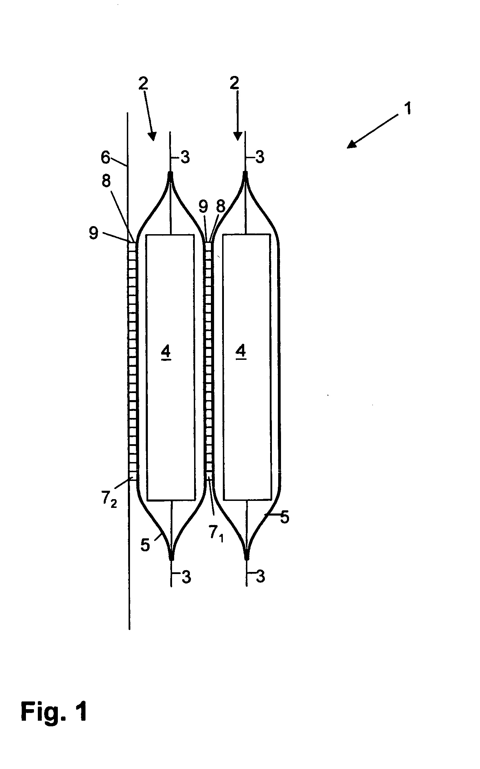

In Figur 1 ist ausschnittsweise eine erfindungsgemäße Batterieanordnung 1 gezeigt. Die Batterieanordnung 1 weist mehrere elektrochemische Zellen 2 auf, von denen lediglich zwei dargestellt sind. Es können auch mehrere elektrochemische Zellen 2 vorgesehen sein. Die elektrochemischen Zellen 2 weisen einen Elektrodenstapel 4 auf, der von einer Umhüllung 5 gas- und flüssigkeitsdicht verschlossen ist. Aus der Umhüllung 5 erstreckt sich an jeweils gegenüber liegenden Seiten der Umhüllung 5 ein Stromableiter 3 aus der Umhüllung 5, der in elektrischem Kontakt mit dem Elektrodenstapel 4 ist.

Es ist zu erkennen, dass die beiden gezeigten elektrochemischen Zellen 2 aneinander in Anlage sind. Dabei ist eine erste Klettverbindungsvorrichtung 7₁ zwischen zwei Anlageflächen der elektrochemischen Zelle 2 vorgesehen, welche für eine feste, aber einfach lösbare Verbindung zwischen den Umhüllungen 5 der elektrochemischen Zellen dient.

Die erste Klettverbindungsvorrichtung 7₁ hat zwei Klettteile, wobei ein Klettteil, der durch mehrere Haken 8 gebildet ist, an der Umhüllung der einen elektrochemischen Zelle angebracht ist, und der andere Klettteil der Klettverbindungsvorrichtung 7₁, der durch mehrere Schlaufen 9 gebildet ist, an der Umhüllung 5 der anderen elektrochemischen Zelle 2 angebracht ist. Die beiden Klettteile der Klettverbindungsvorrichtung 7 können miteinander in Anlage geraten. Dabei können sich die Haken 8 und die Schlaufen 9 miteinander verhaken.

Auf der linken Seite der linken elektrochemischen Zelle 2 in Figur 1 ist eine Gehäusewand 6 schematisch dargestellt. Zwischen der Umhüllung 5 der linken elektrochemischen Zelle 2 und der Gehäusewand 6 ist eine zweite Klettverbindungsvorrichtung 7₂ angeordnet, die weitgehend der vorgenannten Klettverbindungsvorrichtung 7₁ zwischen den beiden elektrochemischen Zellen 2 entspricht.

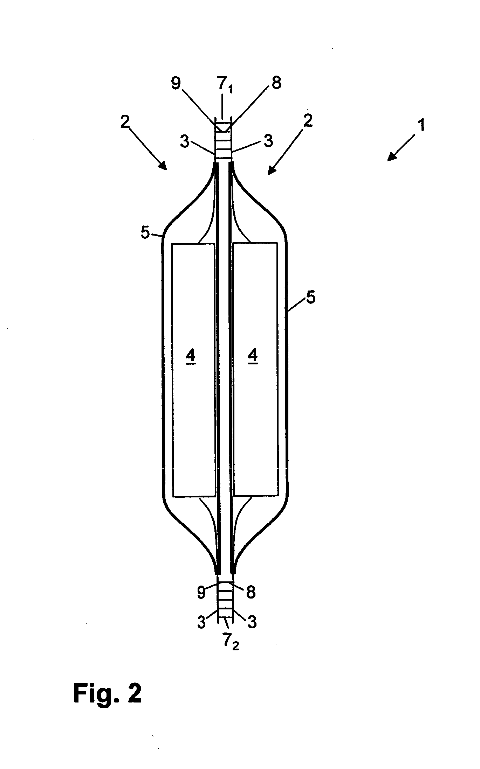

Figur 2 zeigt eine weitere Ausführungsform der Erfindung, die weitgehend der ersten Ausführungsform entspricht. Im Folgenden wird nur auf die Unterschiede eingegangen.

Die Stromableiter 3 der elektrochemischen Zelle 2 sind miteinander verbunden. Dabei ist zwischen den Stromableitern 3 jeweils eine Klettverbindungsvorrichtung 7 vorgesehen, sodass die Stromableiter 3 miteinander fest, aber lösbar verbunden sind. Dabei sind an einem Stromableiter 3 Haken 8 ausgebildet, welche in Schlaufen 9 eingreifen, die am anderen Stromableiter 3 ausgebildet sind. Die Haken 8 und die Schlaufen 9 sind jeweils einstückig mit dem jeweiligen Stromableiter 3 ausgebildet und durch Ausstanzungen der jeweils aus Blech hergestellten Stromableiter gebildet. Die beiden elektrochemischen Zellen 2 sind ausschließlich über die Klettverbindungsvorrichtungen 7 an den Stromableitern 3 miteinander verbunden. Weitere Befestigungen sind nicht vorgesehen. Es ist jedoch auch möglich, dass in einer weiteren Ausgestaltung die beiden gezeigten elektrochemischen Zellen 2 ferner über eine zusätzliche Klettverbindungsvorrichtung an den jeweiligen Umhüllungen 5 miteinander verbunden sind, wie es in der Figur 1 gezeigt ist.

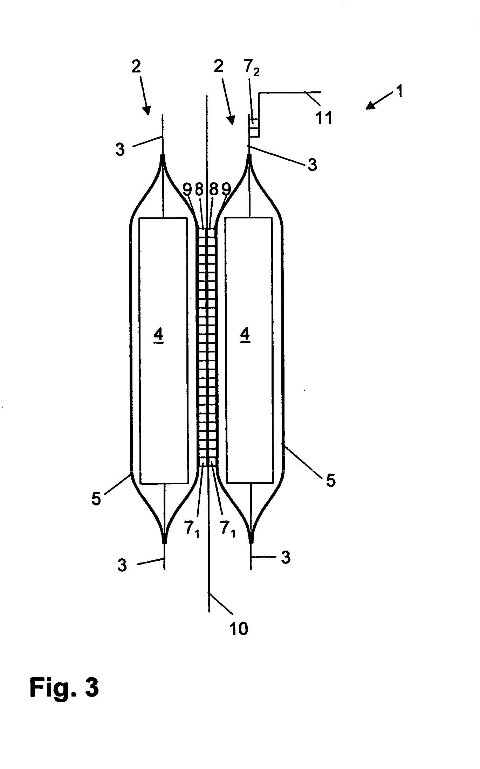

Figur 3 zeigt eine Batterieanordnung 1 in einer dritten Ausführungsform, die im Wesentlichen der ersten Ausführungsform entspricht. Im Folgenden wird nur auf die Unterschiede eingegangen.

Im Gegensatz zur Batterieanordnung 1 der ersten Ausführungsform sind die beiden gezeigten elektrochemischen Zellen 2 nicht unmittelbar miteinander in Anlage. Vielmehr ist zwischen den beiden elektrochemischen Zellen 2 eine Wärmeleitplatte 10 angeordnet. Zwischen einer elektrochemischen Zelle 2 und der Wärmeleitplatte 10 ist jeweils eine Klettverbindungsvorrichtung 7₁ vorgesehen, die weitgehend der ersten Klettverbindungsvorrichtung entspricht, wie sie in Figur 1 beschrieben ist.

Eine weitere Klettverbindungsvorrichtung 7₂ ist zwischen einem Stromableiter 3 der rechten elektrochemischen Zelle 2 und einem Kontaktierungselement 11 vorgesehen. Das Kontaktierungselement 11 ist aus Blech hergestellt. Die Klettverbindungsvorrichtung 7₂ zur Verbindung des Stromableiters 3 mit dem Kontaktierungselement 11 ist im Wesentlichen identisch ausgestaltet wie die Klettverbindungsvorrichtung gemäß der Batterieanordnung der zweiten Ausführungsform zur Verbindung zweier Stromableiter 3.

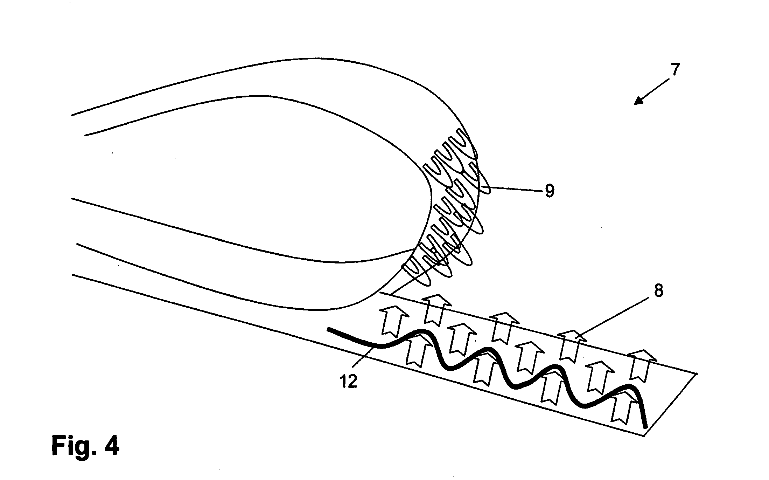

Figur 4 zeigt eine Klettverbindungsvorrichtung, welche für die Verwendung in den Batterieanordnungen gemäß den Figuren 1 bis 3 verwendet werden kann.

Es ist zu erkennen, dass die Klettverbindungsvorrichtung 7 zwei Klettteile aufweist, wobei ein Klettteil durch Haken 8 gebildet ist und der andere Klettteil durch Schlaufen 9 gebildet ist. Die Haken 8 und Schlaufen 9 können sich miteinander verhaken, wodurch eine feste Verbindung der beiden Klettteile bewirkt wird.

Zwischen den Haken 8 ist eine Kühlschlange 12 eingefädelt. Die Kühlschlange 12 ist als flexibles Rohrelement ausgebildet, durch das eine Kühlflüssigkeit strömen kann. Diese Kühlflüssigkeit dient zur Ableitung oder Zuleitung von Wärme bzw. Kälte an die Klettverbindungsvorrichtung 7, wodurch angrenzende elektrochemische Zellen 2 temperiert werden können.

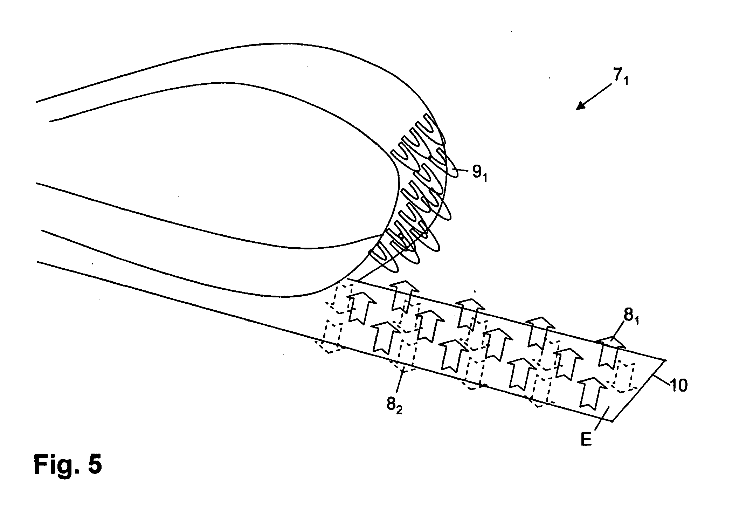

Figur 5 zeigt eine Wärmeleitplatte 10. Die Wärmeleitplatte 10 ist eben ausgestaltet. Die Wärmeleitplatte weist auf einer ersten Seite erste Haken 8₁ auf, die sich senkrecht zu einer Ebene E der Wärmeleitplatte 10 aus der Wärmeleitplatte 10 heraus erstrecken. Die Haken 8₁ sind durch Ausstanzungen aus der aus Blech hergestellten Wärmeleitplatte 10 gebildet. Auf einer zweiten Seite der Wärmeleitplatte ragen zweite Haken 8₂ in entgegengesetzter Richtung zu den ersten Haken 8₁ aus der Wärmeleitplatte 10 hervor, welche ebenfalls durch Ausstanzungen hergestellt sind. Die Haken 8₁ und 8₂ stellen jeweils Klettelemente von unterschiedlichen Klettverbindungsvorrichtungen dar. So kann die Wärmeleitplatte mit den Haken 8₁ mittels einer ersten Klettverbindungsvorrichtung mit einer ersten elektrochemischen Zelle verbunden werden; mit den Haken 8₂ kann die Wärmeleitplatte 10 mittels einer zweiten Klettverbindungsvorrichtung mit einer zweiten elektrochemischen Zelle verbunden werden.

Die Klettelemente der Klettverbindungsvorrichtungen sämtlicher Ausführungsformen können anstelle durch Paare von Haken und Schlaufen auch durch Paare von Haken und Haken gebildet sein. Die spezifischen Merkmale sämtlicher Ausführungsformen können miteinander kombiniert werden, sofern dadurch keine Widersprüchlichkeiten entstehen.

### Bezugszeichenliste

- 1: Batterieanordnung
- 2: elektrochemische Zelle
- 3: Stromableiter
- 4: Elektrodenstapel
- 5: Umhüllung
- 6: Gehäusewand
- 7: Klettverbindungsvorrichtung
- 8: Haken
- 9: Schlaufen
- 10: Wärmeleitplatte
- 11: Kontaktierungselement
- 12: Kühlschlange

- E: Ebene

## Patentansprüche

1. Elektrochemische Zelle (2), aufweisend einen Elektrodenstapel (4), eine Umhüllung (5), die den Elektrodenstapel zumindest teilweise umschließt, und zumindest einen Stromableiter (3), der sich aus der Umhüllung (5) erstreckt und in stromübertragender Verbindung zumindest mit Teilen des Elektrodenstapels (4) steht, wobei ein Klettteil einer Klettverbindungsvorrichtung (7) an der elektrochemischen Zelle (2) angebracht ist und der Klettteil der Klettverbindungsvorrichtung (7) durch eine Anzahl von metallischen Klettelementen gebildet ist, insbesondere durch metallische Haken (8) oder metallische Schlaufen (9),
**dadurch gekennzeichnet, dass**
Zwischenräume zwischen Klettelementen (8, 9) des Klettteils der Klettverbindung (7) gebildet sind und in den Zwischenräumen ein Temperierelement, insbesondere eine Kühlschlange (12) oder eine Kühlmatte, angeordnet ist.

2. Elektrochemische Zelle nach Anspruch 1,
**dadurch gekennzeichnet, dass**
ein Klettteil der Klettverbindungsvorrichtung (7) an einer Umhüllung (5) der elektrochemischen Zelle (2) angebracht ist, und insbesondere einstückig mit der Umhüllung der elektrochemischen Zelle ausgebildet ist.

3. Elektrochemische Zelle nach Anspruch 1 oder 2,
**dadurch gekennzeichnet, dass**
ein Klettteil einer Klettverbindungsvorrichtung (7) an einem Stromableiter (3) angebracht ist, und insbesondere einstückig mit einem Stromableiter (3) der elektrochemischen Zelle (2) ausgebildet ist.

4. Elektrochemische Zelle nach einem der vorhergehenden Ansprüche,
**dadurch gekennzeichnet, dass**
ein Klettteil einer Klettverbindungsvorrichtung (7) durch Ausstanzungen an der elektrochemischen Zelle, insbesondere am Stromableiter (3) oder an der Umhüllung, gebildet ist.

5. Batterieanordnung (1), mit zumindest einer elektrochemischen Zelle (2), insbesondere zwei oder mehr elektrochemischen Zellen (2), nach einem der vorhergehenden Ansprüche.

6. Batterieanordnung nach Anspruch 5,
**dadurch gekennzeichnet, dass**
zumindest zwei elektrochemische Zellen (2) mittels einer Klettverbindungsvorrichtung (7) miteinander befestigt sind, insbesondere ausschließlich mittels der Klettverbindungsvorrichtung (7) miteinander befestigt sind.

7. Batterieanordnung nach Anspruch 5 oder 6,
**dadurch gekennzeichnet, dass**
zumindest eine Wärmeleitplatte (10) mittels einer Klettverbindungsvorrichtung (7) mit einer elektrochemischen Zelle (2) verbunden ist, insbesondere mittels einer ersten Klettverbindungsvorrichtung (7₁) mit einer ersten elektrochemischen Zelle (2) verbunden ist und mittels einer zweiten Klettverbindungsvorrichtung (7₂) mit einer zweiten elektrochemischen Zelle (2) verbunden ist.

8. Batterieanordnung nach Anspruch 7,
**dadurch gekennzeichnet, dass**
Klettelemente (8₁) der ersten Klettverbindungsvorrichtung (7₁) durch Ausstanzungen an der Wärmeleitplatte (10) in eine erste Richtung gebildet sind, und Klettelemente (8₂) der zweiten Klettverbindungsvorrichtung (7₂) durch Ausstanzungen an der Wärmeleitplatte (10) in eine zweite Richtung gebildet ist.

## Claims

1. An electrochemical cell (2) comprising an electrode stack (4), a casing (5) at least partially enclosing the electrode stack, and at least one current collector (3) extending out of the casing (5) and in current-carrying contact with at least parts of the electrode stack (4), wherein a hook-and-loop part of a hook-and-loop fastening apparatus (7) is attached to the electrochemical cell (2) and the hook-and-loop part of the hook-and-loop fastening apparatus (7) is formed by a plurality of metal hook-and-loop elements, particularly metal hooks (8) or metal loops (9),
**characterized in that**
spaces are formed between hook-and-loop elements (8, 9) of the hook-and-loop part of the hook-and-loop fastening apparatus (7) and a temperature control element, particularly a cooling coil (12) or a cooling mat, is arranged in the spaces.

2. The electrochemical cell according to claim 1,
**characterized in that**
a hook-and-loop part of the hook-and-loop fastening apparatus (7) is attached to a casing (5) of the electrochemical cell (2) and is in particular constructed integrally with the casing of the electrochemical cell.

3. The electrochemical cell according to claim 1 or 2,
**characterized in that**
a hook-and-loop part of the hook-and-loop fastening apparatus (7) is attached to a current collector (3) and is in particular constructed integrally with a current collector (3) of the electrochemical cell (2).

4. The electrochemical cell according to any one of the preceding claims,
**characterized in that**
a hook-and-loop part of the hook-and-loop fastening apparatus (7) is formed by cutouts on the electrochemical cell, particularly on the current collector (3) or on the casing.

5. A battery assembly (1) comprising at least one electrochemical cell (2), particularly two or more electrochemical cells (2), in accordance with any one of the preceding claims.

6. The battery assembly according to claim 5,
**characterized in that**
at least two electrochemical cells (2) are attached to each other by means of a hook-and-loop fastening apparatus (7), in particular attached to each other solely by means of the hook-and-loop fastening apparatus (7).

7. The battery assembly according to claim 5 or 6,
**characterized in that**
at least one heat-conducting plate (10) is connected to an electrochemical cell (2) by means of a hook-and-loop fastening apparatus (7), particularly connected to a first electrochemical cell (2) by means of a first hook-and-loop fastening apparatus (7₁) and connected to a second electrochemical cell (2) by means of a second hook-and-loop fastening apparatus (7₂).

8. The battery assembly according to claim 7,
**characterized in that**
hook-and-loop elements (8₁) of the first hook-and-loop fastening apparatus (7₁) are formed by cutouts in a first direction on the heat-conducting plate (10) and hook-and-loop elements (8₂) of the second hook-and-loop fastening apparatus (7₂) are formed by cutouts in a second direction on the heat-conducting plate (10).

## Revendications

1. Cellule électrochimique (2), comportant un empilement d'électrodes (4), une enveloppe (5) entourant au moins partiellement l'empilement d'électrodes, et au moins un collecteur de courant (3) s'étendant à partir de l'enveloppe (5) et en liaison conductrice de courant au moins avec des parties de l'empilement d'électrodes (4), une partie auto-agrippante d'un dispositif de raccordement auto-agrippant (7) étant appliquée sur la cellule électrochimique (2) et la partie auto-agrippante du dispositif de raccordement auto-agrippant (7) étant constituée d'une pluralité d'éléments auto-agrippants métalliques, en particulier par des crochets (8) métalliques ou des boucles (9) métalliques,
**caractérisée en ce que**
des interstices sont formés entre les éléments auto-agrippants (8, 9) de la partie auto-agrippante du dispositif de raccordement auto-agrippant (7), et **en ce qu'**un élément thermostatique, en particulier un serpentin de refroidissement (12) ou un treillis de refroidissement est disposé dans les interstices.

2. Cellule électrochimique selon la revendication 1,
**caractérisée en ce que**
une partie auto-agrippante du dispositif de raccordement auto-agrippant (7) est appliquée contre une enveloppe (5) de la cellule électrochimique (2), et est en particulier formée d'une seule pièce avec l'enveloppe de la cellule électrochimique.

3. Cellule électrochimique selon la revendication 1 ou 2,
**caractérisée en ce que**
une partie auto-agrippante d'un dispositif de raccordement auto-agrippant (7) est appliquée contre un collecteur de courant (3), et est en particulier formée d'une seule pièce avec un collecteur de courant (3) de la cellule électrochimique (2).

4. Cellule électrochimique selon l'une des revendications précédentes,
**caractérisée en ce que**
une partie auto-agrippante d'un dispositif de raccordement auto-agrippant (7) est formée par des poinçonnages sur la cellule électrochimique, en particulier sur le collecteur de courant (3) ou sur l'enveloppe.

5. Agencement de batterie (1), avec au moins une cellule électrochimique (2), en particulier au moins deux cellules électrochimiques (2) selon l'une des revendications précédentes.

6. Agencement de batterie selon la revendication 5,
**caractérisé en ce que**
au moins deux cellules électrochimiques (2) sont raccordées l'une à l'autre au moyen d'un dispositif de raccordement auto-agrippant (7), en particulier exclusivement au moyen du dispositif de raccordement auto-agrippant (7).

7. Agencement de batterie selon la revendication 5 ou 6,
**caractérisé en ce que**
au moins une plaque thermoconductrice (10) est raccordée à une cellule électrochimique (2) au moyen d'un dispositif de raccordement auto-agrippant (7), en particulier à une première cellule électrochimique (2) au moyen d'un premier dispositif de raccordement auto-agrippant (7₁), et à une deuxième cellule électrochimique (2) au moyen d'un deuxième dispositif de raccordement auto-agrippant (7₂).

8. Agencement de batterie selon la revendication 7,
**caractérisée en ce que**
des éléments auto-agrippants (8₁) du premier dispositif de raccordement auto-agrippant (7₁) sont formés par des poinçonnages dans une première direction sur la plaque thermoconductrice (10), et **en ce que** des éléments auto-agrippants (8₂) du deuxième dispositif de raccordement auto-agrippant (7₂) sont formés par des poinçonnages dans une deuxième direction sur la plaque thermoconductrice (10).
